# EUROPEAN PATENT SPECIFICATION

(11) **EP 0 589 111 B1**
(45) Date of publication and mention of the grant of the patent: **30.07.1997**
(21) Application number: 92402504.2
(22) Date of filing: 14.09.1992
(51) Int. Cl.: H04N 7/167

(54) **Method and decoder for evaluating access control related data**
Verfahren und Dekodieren zur Auswertung zugriffssteuerungsbezogener Daten
Méthode et décodeur pour évaluer les données liées au contrôle d'accès

(43) Date of publication of application: 30.03.1994
(73) Proprietor: THOMSON multimedia, 92400 Courbevoie (FR)
(72) Inventor: Diehl, Eric, F-67100 Strasbourg (FR); Harmon, Joel, F-67640 Lipsheim (FR)
(74) Representative: Hartnack, Wolfgang, Dipl.-Ing.

(56) References cited:
- US-A- 4 471 379
- US-A- 4 503 462
- PATENT ABSTRACTS OF JAPAN vol. 7, no. 186 (E-193)16 August 1983 & JP-A-58 088 936

## Description

The present invention relates to a method and to a decoder for evaluating access control data.

### Background

Every new Pay TV system is based today on the use of entitlements stored either in the decoder or in a detachable control access system, typically a smart card. The user gains access to the programme only, if the description of the current broadcast programme fits with the entitled rights owned by the user. The entitlements are currently updated 'over-the-air' i.e. data, often in encrypted format, are send together with the scrambled video. Their analysis by the control access system updates the current entitlements of the user.
But if the user is not tuned on the channel carrying these 'over the air' data while data dedicated to him are emitted, these data are lost and the programme provider has no information of this loss. Therefore the programme provider does not know the exact state of the stored entitlements of the users. This state may even be different from the image contained in the subscriber management system.

### Invention

It is one object of the invention to disclose a method of sending entitlements to all decoders in an inexpensive and easy way to solve this problem. This object is reached by the method disclosed in claim 1.

It is a further object of the invention to disclose a decoder which utilises the inventive method. This object is reached by the decoder disclosed in claim 9.

Currently two solutions are used to cope with this addressing problem:
- Sending more than once the entitlement data. This method is efficient and from the point of view of material cost implies no price impairment. But there are two main counterparts: the bandwidth necessary to transmit the entitlement rights is drastically increased or for the same bandwidth the time requested to update a complete population is more important. Furthermore, there is no way to know if the data were received.
- Using a back link. The decoder can be equipped with a modem or in a cable network environment with a modulator. The decoder can then 'phone' to the subscriber management centre and confirm the reception of the rights. The draw back is obvious: it is expensive, the price of the decoder is increased and the subscriber management center has to be equipped with an expensive automatic phone center.

A conventional subscription television signal decoder is disclosed in US-A-4 503 462.

To overcome these disadvantages the invention operates in the following way: Each night, at a given hour (so called wake up hour) every decoder tunes to a pre-defined video or audio channel, so called Barker channel. Even the decoders which were previously in stand-by mode, will wake-up in order to tune to the Barker channel.
In order not to disturb the user in his night when waking up, the decoder does not activate signals going to the external world, such as Pin 8 of a SCART plug.
The programme provider can then send the maximum of entitlements on the Barker channel knowing that every decoder, which is powered, will be listening to its data stream.
It is possible to use the data of the Barker channel in a more efficient way than during a normal descrambling session.
Following are several suggested methods:
- the full band width is used for the data, replacing video and/or or audio information by entitlement information;
- transmit over the air only data related to entitlements (EMM in EUROCRYPT terminology) and suppress every data related to the scrambling process (ECM in EUROCRYPT terminology);
- using a more efficient data protocol knowing that the access control process will work only with entitlements.

The decoder extracts the data from the Barker channel and transfers them to the access control system. If one of the enhanced transmission modes formerly described is used, the access control system will act in consequence. At a given hour called sleep hour, the decoders return to stand-by mode.

The wake-up and the sleep hours need not to be stored definitively in the decoder. At the beginning of each session, it is possible to transfer the wake-up and sleep hours definition for the next session. In the same way, the Barker channel definition can be send over the air.

In order to operate correctly, it is important that the time shift between the actual time and the decoder's internal clock is not too large. One solution is, to send over the air also the current time in order to update the decoder's internal clock, at least once per day.

The data send during a night period, i.e. between wake-up and sleep time, are not necessarily dedicated only to entitlement updates. The same night period can also be used for down loading data to update e.g. algorithms, encryption keys and/or frequency allocation tables in the decoder. The programme provider has the guarantee that all installed decoders will be updated.

In principle the inventive method consists in evaluating in a decoder access control related data - especially entitlements - which are transmitted within a broadcasted signal, whereby in said decoder the time (4) is monitored in processor means (6) and all such decoders suited for receiving said broadcasted signal are prepared to receive said access control related data between a determined wake-up time and a determined sleep time - denoted as session - using means for demodulating (2) and/or extracting (3) and/or processing (5) said access control data, and whereby these means are active after said wake-up time and these means are allowed to be in a stand-by mode after said sleep time under the control of said processor means and whereby during said session said means for access control (5) are entitled or further entitled to have access to said broadcasted and/or further broadcasted signal/s.

Advantageous additional embodiments of the inventive method are resulting from the respective dependent claims.

In principle the inventive decoder comprises power supply means (7) and clock means (4) controlled by processor means (6), which detect the time period between a determined wake-up time and a determined sleep time - denoted as session - and which activate in said session using said power supply means (7) means for demodulating (2) a TV or audio signal broadcasted in a Barker channel and means for extracting (3) from there access control related data and means for allowing access control (5) to said or further TV and/or audio channel/s, and which dis-activate after said session these means using said power supply means (7), whereby said means for access control (5) are entitled or further entitled to have access to determined TV and/or audio signals.

### Drawing

Preferred embodiments of the invention are described with reference to the accompanying drawing, which shows in:

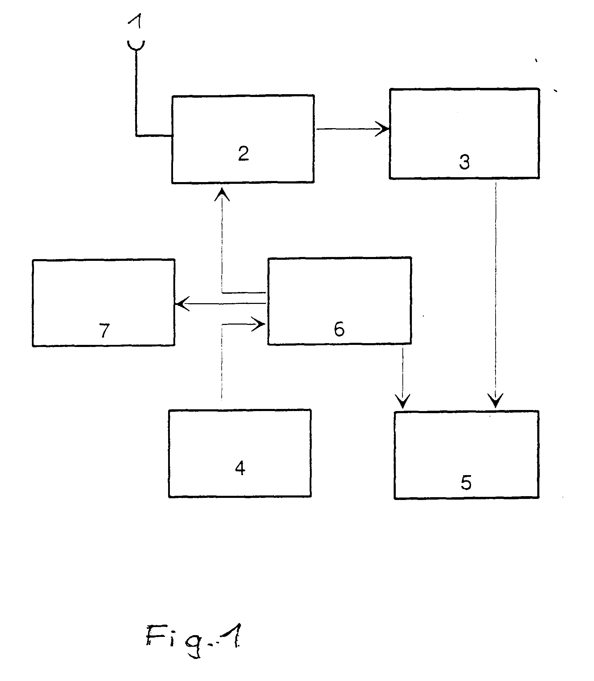

- Fig. 1: inventive decoder.

### Preferred embodiments

During stand-by mode a power supply unit 7 maintains powered only a central processor 6 and a clock 4. This clock can be either a dedicated external component like a real time clock or a software task part of the software running in processor 6. The central processor waits until the time delivered by the clock is equal or greater than the wake up hour.
Then power supply 7 is switched in a mode, where a tuner 2, a data extractor 3 and an access control system 5 are activated. Central processor 6 then transmits the frequency of the Barker channel to the tuner. The video signal received from input 1 is demodulated by the tuner and passed to the data extractor. The extracted data are passed to the access control system. This system can either be a separate process in a different processor or resident into the central processor.
In case that other data than entitlement rights are transmitted, they will be shared between the access control system and the central processor.
Once the time delivered by clock 4 is greater or equal to the sleep hour, the power supply is switched back by processor 6 to its stand-by mode, deactivating tuner, data extractor and access control system.

The invention can be applied to different pay TV or pay audio systems, e.g. EUROCRYPT or VIDEOCRYPT.

## Claims

1. Method for evaluating in a decoder access control related data - especially entitlements - which are transmitted within a TV or audio broadcasted signal, **characterised in** that in said decoder the time (4) is monitored in processor means (6) and all such decoders suited for receiving said broadcasted signal are prepared to receive said access control related data between a determined wake-up time and a determined sleep time - denoted as session - using means for demodulating (2) and/or extracting (3) and/or processing (5) said access control data, whereby these means are active after said wake-up time and these means are allowed to be in a stand-by mode after said sleep time under the control of said processor means and whereby during said session said means for access control (5) are entitled or further entitled to have access to said TV or audio broadcasted and/or further TV or audio broadcasted signals based on said received access control related data.

2. Method according to claim 1, **characterised in** that said access control related data are transmitted within a dedicated TV and/or audio Barker channel and that said means for demodulating (2) are tuned during said session to a Barker channel under the control of said processor means (6).

3. Method according to claim 1 or 2, **characterised in** that during said session said wake-up time and/or said sleep time for the next session is transmitted in said Barker channel and evaluated in said processor means (6).

4. Method according to claim 2 or 3, **characterised in** that during said session the frequency or number of the channel to be tuned for the next session is transmitted in said Barker channel and evaluated in said processor means (6).

5. Method according to any of claims 1 to 4, **characterised in** that - especially during said session in said Barker channel - the current time is transmitted and used to set said decoder time (4) by said processor means (6).

6. Method according to any of claims 1 to 5, **characterised in** that during said session algorithms, encryption keys, frequency allocation tables and/or other decoder related data are transmitted in said Barker channel and down-loaded for updating into said decoder.

7. Method according to any of claims 2 to 6, **characterised in** that during said session video and/or audio information in said Barker channel is replaced by access control related data.

8. Method according to claim 7, **characterised in** that said access control related data are entitlement data.

9. Decoder for a method according to any of claims 1 to 8, comprising:
power supply means (7) and clock means (4) controlled by processor means (6), which detect the time period between a determined wake-up time and a determined sleep time - denoted as session - and which activate in said session, using said power supply means (7), means for demodulating (2) a TV or audio signal broadcasted in a Barker channel, means for extracting (3) from there access control related data and means for allowing access control (5) to said or further TV or audio broadcasted channels, and which dis-activate after said session these means using said power supply means (7), whereby said means for access control (5) are entitled or further entitled to have access to determined TV or audio and/or signals on the basis of said received access control related data.

## Patentansprüche

1. Verfahren zur Auswertung von zugriffssteuerungsbezogenen Daten in einem Dekoder - insbesondere von Berechtigungen - die innerhalb eines ausgesendeten Fernseh- oder Audiosignals übertragen werden, **dadurch gekennzeichnet,** daß in dem Dekoder die Zeit (4) in Prozessormitteln (6) überwacht wird und alle Dekoder, die für den Empfang des ausgesendeten Signals geeignet sind, für den Empfang der zugriffssteuerungsbezogenen Daten zwischen einer vorgegebenen Aufwachzeit und einer vorgegebenen Einschlafzeit - als Session bezeichnet - bereit sind, wobei Mittel (2) zum Demodulieren und/oder zum Herausziehen (3) und/oder zum Verarbeiten (5) der zugriffssteuerungsbezogenen Daten vorgesehen sind, wobei diese Mittel unter der Steuerung der Prozessormittel nach der Aufwachzeit aktiv werden und diese Mittel nach der Einschlafzeit in einem Bereitschaftsbetrieb sein dürfen, und wobei während dieser Session die Mittel für die Zugriffs-Steuerung (5) berechtigt oder weiter berechtigt werden, Zugriff zu den gesendeten und/oder weiteren gesendeten Fernseh- oder Audiosignalen zu haben, die auf den empfangenen zugriffssteuerungsbezogenen Daten beruhen.

2. Verfahren nach Anspruch 1, **dadurch gekennzeichnet**, daß die zugriffssteuerungsbezogenen Daten in einem zugeordneten Fernseh- und/oder Audio-Barker-Kanal übertragen werden, und daß die Mittel zur Demodulation (2) während der Session auf einen Barker-Kanal unter der Steuerung der Prozessormittel (6) abgestimmt werden.

3. Verfahren nach Anspruch 1 oder 2, **dadurch gekennzeichnet,** daß während der Session die Aufwachzeit und/oder die Einschlafzeit für die nächste Session in dem Barker-Kanal übertragen und in den Prozessormitteln (6) ausgewertet wird.

4. Verfahren nach Anspruch 2 oder 3, **dadurch gekennzeichnet,** daß während der Session die Frequenz oder die Nummer des abzustimmenden Kanals für die nächste Session in dem Barker-Kanal übertragen und in den Prozessormitteln (6) ausgewertet wird.

5. Verfahren nach einem der Ansprüche 1 bis 4, **dadurch gekennzeichnet,** daß - insbesondere während der Session in dem Barker-Kanal - die gegenwärtige Zeit übertragen und zur Einstellung der Dekoder-Zeit (4) durch die Prozessormittel (6) verwendet wird.

6. Verfahren nach einem der Ansprüche 1 bis 5, **dadurch gekennzeichnet,** daß während der Session Algorithmen, Kodierungs-Schlüssel, Frequenz-Zuordnungstabellen und/oder andere dekoderbezogene Daten in den Barker-Kanal übertragen und für die Aktualisierung in den Dekoder abgeladen werden.

7. Verfahren nach einem der Ansprüche 2 bis 6, **dadurch gekennzeichnet,** daß während der Session Video- und/oder Audio-Information in dem Barker-Kanal durch zugriffssteuerungsbezogene Daten ersetzt wird.

8. Verfahren nach Anspruch 7, **dadurch gekennzeichnet**, daß die zugriffssteuerungsbezogenen Daten Berechtigungsdaten sind.

9. Dekoder für ein Verfahren nach einem der Ansprüche 1 bis 8, umfassend:
von Prozessormitteln (6) gesteuerte Stromversorgungsmittel (7) und Uhrmittel (4), die die Zeitperiode zwischen einer bestimmten Aufwachzeit und einer bestimmten Einschlafzeit - als Session bezeichnet - feststellen, und die unter Verwendung der Stromversorgungsmittel (7) in der Session Mittel zur Demodulation (2) eines in einem Barker-Kanal gesendeten Fernseh-oder Audiosignals, Mittel (3), um von dort zugriffssteuerungs-bezogene Daten herauszuziehen, und Mittel, die eine Zugriffs-Steuerung (5) zu dem oder weiteren gesendeten Fernseh- oder Audiokanälen zulassen, aktivieren, und die nach der Session diese Mittel unter Verwendung der Stromversorgungsmittel (7) inaktivieren, wodurch die Mittel für die Zugriffs-Steuerung (5) berechtigt oder weiter berechtigt werden, Zugriff zu bestimmten Fernseh- oder Audiosignalen zu haben, die auf den empfangenen zugriffssteuerungsbezogenen Daten beruhen.

## Revendications

1. Procédé pour évaluer dans un décodeur des données relatives à une commande d'accès - spécialement des droits - qui sont émises à l'intérieur d'un signal diffusé de télévision ou d'audio, caractérisé en ce que dans ledit décodeur l'heure (4) est contrôlée dans des moyens de processeur (6) et tous les décodeurs convenant à la réception dudit signal diffusé sont préparés pour recevoir lesdites données relatives à la commande d'accès entre une heure de réveil déterminée et une heure de sommeil déterminée - définissant une session - en utilisant des moyens pour démoduler (2) et/ou extraire (3) et/ou traiter (5) lesdites données de commande d'accès, par lequel ces moyens sont actifs après ladite heure de réveil et ces moyens sont autorisés à être dans un mode de veille après ladite heure de sommeil sous la commande desdits moyens de processeur et par lequel durant ladite session lesdits moyens de commande d'accès (5) sont autorisés ou autorisés en plus à avoir accès auxdits signaux de télévision ou d'audio diffusés ou autres signaux de télévision o d'audio diffusés en fonction desdites données relatives à la commande d'accès reçues.

2. Procédé selon la revendication 1, caractérisé en ce que lesdites données relatives à la commande d'accès sont émises à l'intérieur d'un canal d'annonce de télévision et/ou d'audio dédié et en ce que lesdits moyens de démodulation (2) sont accordés durant ladite session sur un canal d'annonce sous la commande desdits moyens de processeur (6).

3. Procédé selon la revendication 1 ou 2, caractérisé en ce que durant ladite session ladite heure de
réveil et/ou ladite heure de sommeil de la session suivante est émise dans ledit canal d'annonce et évaluée dans lesdits moyens de processeur (6).

4. Procédé selon la revendication 2 ou 3, caractérisé en ce que durant ladite session la fréquence ou le numéro du canal à accorder pour la session suivante est émis dans ledit canal d'annonce et évalué dans lesdits moyens de processeur (6).

5. Procédé selon l'une quelconque des revendications 1 à 4, caractérisé en ce que - spécialement durant ladite session dans ledit canal d'annonce - l'heure en cours est émise et utilisée pour régler ladite heure de décodeur (4) par lesdits moyens de processeur (6).

6. Procédé selon l'une quelconque des revendications 1 à 5, caractérisé en ce que durant ladite session des algorithmes, des clés de cryptage, des tables d'attribution de fréquence et/ou d'autres données relatives au décodeur sont émises dans ledit canal d'annonce et téléchargées en vue d'une mise à jour dans ledit décodeur.

7. Procédé selon l'une quelconque des revendications 2 à 6, caractérisé en ce que durant ladite session lesdites informations vidéo et/ou audio dans ledit canal d'annonce sont remplacées par des données relatives à la commande d'accès.

8. Procédé selon la revendication 7, caractérisé en ce que lesdites données relatives à la commande d'accès sont des données de droits.

9. Décodeur pour un procédé selon l'une quelconque des revendications 1 à 8, comprenant:
un moyen d'alimentation (7) et un moyen d'horloge (4) commandés par les moyens de processeur (6), lesquels détectent la période de temps entre une heure de réveil déterminée et une heure de sommeil déterminée - définissant une session - et qui actionnent dans ladite session, en utilisant ledit moyen d'alimentation (7), des moyens pour démoduler (2) un signal de télévision ou audio diffusé dans un canal d'annonce, des moyens pour extraire (3) à partir de celui-ci des données relatives à la commande d'accès et des moyens pour autoriser la commande d'accès (5) auxdits canaux de télévision ou audio diffusés ou à d'autres, et qui désactivent après ladite session ces moyens en utilisant ledit moyen d'alimentation (7), par lequel lesdits moyens de commande d'accès (5) sont autorisés ou autorisés en plus à avoir accès à des signaux de télévision ou audio déterminés en fonction desdites données relatives à la commande d'accès reçues.
